(19) Europäisches Patentamt
European Patent Office
Office européen des brevets

(11) **EP 3 158 652 B1**

(12) **EUROPEAN PATENT SPECIFICATION**

(45) Date of publication and mention of the grant of the patent:
**26.09.2018 Bulletin 2018/39**

(21) Application number: **15827542.0**

(22) Date of filing: **29.07.2015**

(51) Int Cl.:
*H04B 3/32* *(2006.01)*     *H04L 27/26* *(2006.01)*

(86) International application number:
**PCT/CN2015/085444**

(87) International publication number:
**WO 2016/015649 (04.02.2016 Gazette 2016/05)**

(54) **INTERFERENCE CANCELLATION IN COAXIAL CABLE CONNECTED DATA OVER CABLE SERVICE INTERFACE SPECIFICATION (DOCSIS) SYSTEM OR CABLE NETWORK**

INTERFERENZUNTERDRÜCKUNG IN EINEM DATEN-ÜBER-KABEL-DIENSTSCHNITTSTELLENSPEZIFIKATIONSSYSTEM (DOCSIS) MIT KOAXIALKABELANSCHLUSS ODER KABELNETZWERK

ANNULATION DE BROUILLAGE DANS UN SYSTÈME DE SPÉCIFICATION D'INTERFACE DE SERVICE DE DONNÉES SUR CÂBLE (DOCSIS) CONNECTÉ PAR CÂBLE COAXIAL OU UN RÉSEAU DE CÂBLES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.08.2014   US 201462032328 P**
**28.07.2015   US 201514811432**

(43) Date of publication of application:
**26.04.2017   Bulletin 2017/17**

(73) Proprietor: HUAWEI TECHNOLOGIES CO., LTD.
**Shenzhen Guangdong 518129 (CN)**

(72) Inventors:
• **WU, Guangsheng**
**Wuhan**
**Hubei 330074 (CN)**
• **SI, Xiaoshu**
**Wuhan**
**Hubei 330074 (CN)**
• **CHEN, Jim**
**Corona, CA 82883 (US)**

(74) Representative: **Pfenning, Meinig & Partner mbB Patent- und Rechtsanwälte**
**Theresienhöhe 11a**
**80339 München (DE)**

(56) References cited:
WO-A1-2013/122802     CA-A1- 2 255 272
CN-A- 102 577 181     CN-A- 102 804 611
CN-A- 102 939 726     US-A1- 2012 083 235

**Description**

**BACKGROUND**

Data Over Cable Service Interface Specification (DOCSIS) is an international telecommunication standard developed by CableLabs to transport high-bandwidth data over existing cable television (CATV) networks. Many CATV network operators employ the DOCSIS standard to provide Internet access, such as voice, video on demand (VoD), and video conferencing services, in addition to television content, over hybrid fiber coaxial (HFC) network infrastructure. Several versions of the DOCSIS standard have been established to provide for regional differences in CATV bandwidth. Several generations of the DOCSIS standard have also been developed to meet consumer demand for high-speed connection, complex applications, and better user-experience. For example, DOCSIS version 3.0 was designed to increase transmission bandwidth in both upstream and downstream directions and to support Internet Protocol version 6 (IPv6). Downstream refers to the transmission direction from a cable headend to customer premise equipment (CPEs), whereas upstream refers to the transmission direction from the CPEs to the cable headend. DOCSIS version 3.1 further increases transmission rate and spectral efficiency by employing orthogonal frequency-division multiplexing (OFDM) modulation and improves error correction by employing low-density parity check (LDPC) codes.

Document CA 2 255 272 A1 proposes a process for suppressing parasitic signals caused by external fields, and also an arrangement in which the parasitic signals run both in the inner conductor and also in the sheath conductor of the cable, and the parasitic signals are detected on the sheath conductor, and the phase and/or amplitude of the detected parasitic signals are adapted to the parasitic signals in the inner conductor, and are taken away from the total signal consisting of useful signal and parasitic signal.

Document US 2012/083235 A1 discloses methods and apparatuses to substantially compensate for various unwanted interferences and/or distortions within a communications receiver. Each of these apparatuses and methods estimate the various unwanted interferences and/or distortions within the communications receiver. Each of these apparatuses and methods remove the estimates of the various unwanted interferences and/or distortions within the communications receiver from one or more communications signals within the communications receiver to substantially compensate for the various unwanted interferences and/or distortions.

**SUMMARY**

The present invention is defined in the attached independent claims. Further, other preferred embodiments may be found in the dependent claims appended thereto.

**BRIEF DESCRIPTION OF THE DRAWINGS**

For a more complete understanding of this disclosure, reference is now made to the following brief description, taken in connection with the accompanying drawings and detailed description.

FIG. 1 is a schematic diagram of an embodiment of a DOCSIS network;
FIG. 2 is a schematic diagram of an embodiment of allocations of an RF band;
FIG. 3 is a schematic diagram of an embodiment of a network implementing RF interference cancellation;
FIG. 4 is a schematic diagram of an embodiment of a noise reduction device;
FIG. 5 is a schematic diagram of an embodiment of an NE, which may act as a node in a DOCSIS network;
FIG. 6 is a schematic diagram of an embodiment of an RF interference reconstruction unit;
FIG. 7 is a flowchart of an embodiment of a multi-path search control method;
FIG. 8 is a flowchart of an embodiment of an RF interference cancellation method;
FIG. 9 is a graph illustrating simulated interference cancellation performance in relation to cable length error;
FIG. 10 is a graph illustrating simulated interference cancellation performance in relation to amplitude error;
FIG. 11 is a graph illustrating simulated interference cancellation performance in relation to phase error;
FIG. 12 is a schematic diagram of an embodiment of an experimental setup for measuring RF interference cancellation performance;
FIG. 13 is a graph illustrating measured residual interference power as a function of ingress interference power; and
FIG. 14 is a graph illustrating measured modulation error ratios (MERs) as a function of frequency tone indices.

**DETAILED DESCRIPTION**

It should be understood at the outset that although an illustrative implementation of one or more embodiments are provided below, the disclosed systems and/or methods may be implemented using any number of techniques, whether currently known or in existence. The disclosure should in no way be limited to the illustrative implementations, drawings, and techniques illustrated below, including the exemplary designs and implementations illustrated and described herein, but may be modified within the scope of the appended claims along with their full scope of equivalents. Coaxial systems, such as CATV, may operate over a wide range of RFs, for example, from about 4 megahertz (MHz) to about 1.5 gigahertz (GHz) or about 1.8 GHz. The wide spectrum range may overlap with other access technologies, such as Long Term Evolution (LTE) wireless broadband technology. For example, mobile network operators may deploy LTE-based wireless broadband services operating in RF bands that range from about 600 MHz to about 800 MHz. As such, LTE base stations, LTE phones, and/or any other LTE devices that are located close to CATV equipment may interfere with signals transmitted and/or received by the CATV equipment. CATV equipment may include headend equipment, plant equipment, and/or CPEs. Some examples of headend equipment may include DOCSIS cable modem termination system (CMTS) and convergence cable access platform (CCAP). Some examples of plant equipment may include HFC nodes, remote-CCAPs (R-CCAPs), remote CMTS, remote DOCSIS nodes, remote physical (PHY) layer transmission nodes, and Institute of Electrical and Electronics Engineers (IEEE) 802.11 wireless local area network (WiFi) hot spots. Some examples of CPEs may include set top boxes (STBs), cable modems (CMs), home gateways, and WiFi routers. Some studies have been conducted to assess the impact of LTE interference on coaxial cable equipment, coaxial transmission elements, and/or coaxial cable transmission components. The studies evaluated the interference impact of LTE devices operating at a maximum allowable power (e.g., at about 23 decibel-milliwatts (dBm) Effective Isotropic Radiated Power (EIRP)) and at an average power (e.g., at about 11 dBm EIRP) at a short distance (e.g., about five feet) from the coaxial cable equipment and/or coaxial transmission elements. The studies show that some CPEs may provide sufficient shielding to reject LTE interference. However, retail grade coaxial cables, RF splitters, open connectors, and the like may not provide sufficient shielding to reject LTE interference. As such, LTE signals from nearby LTE base stations, LTE phones, and/or LTE devices may penetrate into the coaxial cables and/or connectors, and thus may degrade cable system performance.

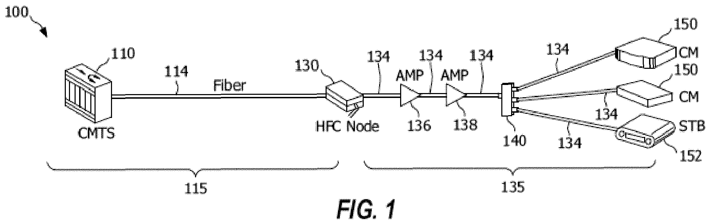

FIG. 1 is a schematic diagram of an embodiment of a DOCSIS network 100. The DOCSIS network 100 may be a DOCSIS 3.0 network or a DOCSIS 3.1 network. The network 100 comprises a CMTS 110, at least one HFC node 130, and any number of CMs 150 and/or STBs 152. Specifically, the HFC node 130 may be coupled to the CMTS 110 via an optical fiber 114, and the CMs 150 and/or the STB 152 may be coupled to the HFC node 130 via electrical cables 134, one or more amplifiers (e.g., amplifiers 136 and 138), and at least one splitter 140.

The CMTS 110 may be any device configured to communicate with the CMs 150 via the HFC node 130. The CMTS 110 may act as an intermediary between the CMs 150 and a backbone network (e.g. the Internet). The CMTS 110 may forward data received from the backbone network to the CMs 150 and forward data received from the CMs 150 onto the backbone network. The CMTS 110 may comprise an optical transmitter and an optical receiver transmitting and/or receiving messages from the CMs 150 via the optical fiber 114. The CMTS 110 may further comprise transmitters and/or receivers for communicating with the backbone network. When the backbone network employs a network protocol that is different from the protocol used in network 100, the CMTS 110 may comprise a converter that converts the backbone network protocol into the protocol of the network 100. The CMTS 110 converter may also convert the network 100 protocol into the backbone network protocol. The CMTS 110 may also be configured to schedule all upstream and downstream transmissions across the network 100, so that transmissions between the CMTS 110 and the CMs 150 may be separated in the time and/or frequency domain, which may allow the transmissions to be separated at an associated destination. An allocation of time and/or frequency resources may be transmitted to the CMs 150 via an Uplink Media Access Plan (UL-MAP) messages and/or Downlink Media Access Plan (DL-MAP) messages.

The CMs 150 and STB 152 may be any devices that are configured to communicate with the CMTS 110 and any subscriber devices in a local network. The CMs 150 and STBs 152 may act as intermediaries between the CMTS 110 and such subscriber devices. The CMs 150 and the STBs 152 may be similar devices, but may be employed to couple to different subscriber devices in some embodiments. For example, an STB 152 may be configured to interface with a television, while a CM 150 may be configured to interface with any local network device with an Internet Protocol (IP) and/or Media Access Control (MAC) address, such as a local computer, a wired and/or wireless router, or local content server, a television, etc. The CMs 150 may forward data received from the CMTS 110 to the subscriber devices, and may forward data received from subscriber devices toward the CMTS 110. Although the specific configuration of the CMs 150 may vary depending on the type of network 100, in an embodiment, the CMs 150 may comprise an electrical transmitter configured to send electrical signals to the CMTS 110 via the HFC node 130 and an electrical receiver configured to receive electrical signals from the CMTS 110 via the HFC node 130. Additionally, the CMs 150 may comprise a converter that converts network 100 electrical signals into electrical signals for subscriber devices, such as signals in a WiFi protocol. The CMs 150 may further comprise a second transmitter and/or a second receiver that may send and/or receive the converted electrical signals to the subscriber devices. In some embodiments, CMs 150 and Coaxial Network Terminals (CNTs) are similar, and thus the terms are used interchangeably herein. The CMs 150 may be typically located at distributed locations, such as the customer premises, but may be located at other locations as well.

The HFC node 130 may be positioned at the intersection of an Optical Distribution Network (ODN) 115 comprising optical fiber 114 and an Electrical Distribution Network (EDN) 135. HFC node 130 may include electro-optical signal translation capabilities (e.g. Open Systems Interconnection (OSI) model layer 1 capabilities). The HFC node 130 may not be configured to perform routing, buffering, or other higher layer functions (e.g. OSI model layer 2-7). Accordingly, the HFC node 130 may translate optical signals received from the optical fiber 114 into electrical signals and forward the electrical signals toward the CMs 150 and STB 152, and vice versa. It should be noted that that the HFC node 130 may be remotely coupled to the CMTS 110 or reside in the CMTS 110. In some embodiments, the CMTS 110 may be equipped with part or all of the functionalities of an HFC node 130.

The ODN 115 may be a data distribution system that may comprise optical fiber 114 and may include cables, couplers, splitters, distributors, and/or other equipment. In an embodiment, the optical fiber 114 and any associated cables, couplers, splitters, distributors, and/or other equipment may be passive optical components. Specifically, the optical fiber 114 and any associated cables, couplers, splitters, distributors, and/or other equipment may be components that do not require any power to distribute data signals between the CMTS 110 and the HFC node 130. It should be noted that the optical fiber 114 may be replaced by any optical transmission media in some embodiments. In some embodiments, the ODN 115 may comprise one or more optical amplifiers. In some embodiments, data distributed across the ODN 115 may be combined with CATV services using multiplexing schemes. The ODN 115 may extend from the CMTS 110 to the HFC node 130 in a branching configuration as shown in FIG. 1, but may be alternatively configured as determined by a person of ordinary skill in the art. Signals transmitted across the ODN 115 may be transmitted as analog signals.

The EDN 135 may be a data distribution system that may comprise electrical cables 134 (e.g. coaxial cables, twisted wires, etc.), couplers, splitters, distributors, and/or other equipment. In an embodiment, the electrical cables, couplers, splitters, distributors, and/or other equipment may be passive electrical components. Specifically, the electrical cables 134, couplers, splitters, distributors, and/or other equipment may be components that do not require any power to distribute data signals between the HFC node 130 and the CMs 150. It should be noted that the electrical cables 134 may be replaced by any electrical transmission media in some embodiments. In some embodiments, the EDN 135 may comprise one or more electrical amplifiers 136. The EDN 135 may extend from the HFC node 130 and the CMs 150 in a branching configuration as shown in FIG. 1, but may be alternatively configured as determined by a person of ordinary skill in the art.

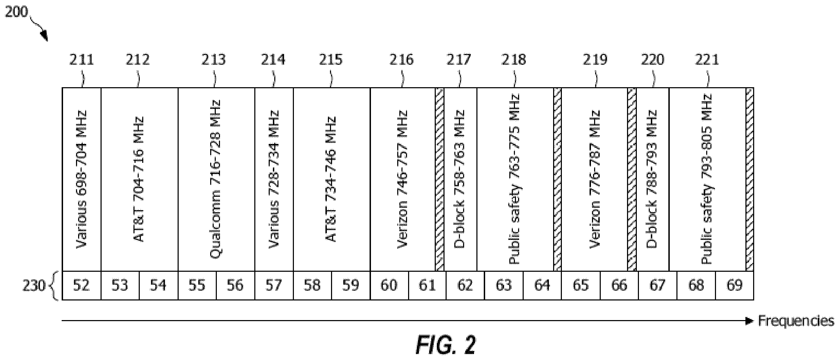

FIG. 2 is a schematic diagram of an embodiment of allocations of an RF band 200. The RF band 200 comprises a spectrum range between about 698 MHz to about 806 MHz. The RF band 200 may be employed by a CMTS, such as the CMTS 110, to transmit CATV contents to subscriber devices, such as the CMs 150 and the STBs 152. For example, the RF band 200 is allocated for CATV channels 230 (e.g., channel number 52-69). However, the RF band 200 is also allocated for deployments of LTE services, public safety services, and/or commercial services. For example, RF sub-bands 212 (e.g., at about 704 MHz to about 716 MHz) and 215 (e.g., at about 734 MHz to about 746 MHz) are employed for LTE services by AT&T. RF sub-bands 211 (e.g., at about 698 MHz to about 704 MHz), 214 (e.g., at about 728 MHz to about 734 MHz), 216 (e.g., at about 746 MHz to about 757 MHz), and 219 (e.g., at about 776 MHz to about 787 MHz) are employed for LTE services by Verizon. RF sub-band 213 (e.g., at about 716 MHz to about 728 MHz) is employed for LTE services by Qualcomm. RF sub-bands 218 (e.g., at about 763 MHz to about 775 MHz) and 221 (e.g., at about 793 MHz to about 805 MHz) are employed for public safety services. RF sub-bands 217 (e.g., at about 758 MHz to about 763 MHz) and 220 (e.g., at about 788 MHz to about 793 MHz) are employed for commercial services. As shown, the deployments of the LTE services, the public safety services, and/or the commercial services in the RF sub-bands 211-221 overlap with CATV channels 230. Thus, transmit signals from LTE services, the public safety services, and/or the commercial services may interfere with CATV signals in the RF band 200 and degrade CATV system performance. When employing digital modulation for transmission in a transmission channel (e.g., CATV channels in the 700 MHz bands), interference may result in an increased noise floor at a receiver.

Disclosed herein are RF interference cancellation mechanisms for use in coaxial cable connected DOCSIS networks by employing noise reduction devices. A noise reduction device is configured to cancel RF interference and/or noise, for example, generated by LTE devices or other RF sources. The noise reduction device may be implemented as a standalone device or integrated into coaxial cable network equipment, such as a CMTS, a CM, an STB, and/or any other DOCSIS network nodes. For example, a standalone noise reduction device may be installed in a coaxial cable network near an RF interference source so that the standalone noise reduction device may cancel and/or reduce RF interference from a signal transported in the coaxial cable network prior to processing by a coaxial cable network equipment in the coaxial cable network. Alternatively, an embedded noise reduction device in a coaxial cable network equipment may act as a receiver preprocessing unit configured to cancel and/or reduce at least some RF interference prior to processing (e.g., demodulation and data decoding) by a receiver of the coaxial cable network equipment.

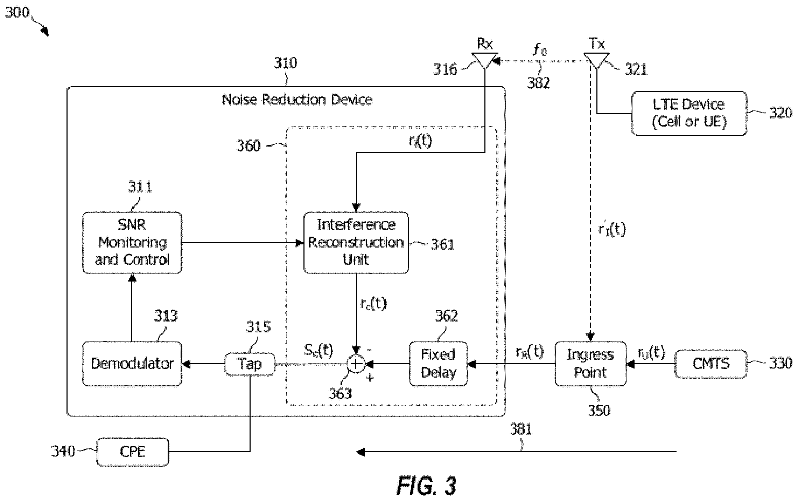

FIG. 3 is a schematic diagram of an embodiment of a network 300 implementing RF interference cancellation. The network 300 in some embodiments implements radio frequency (RF) or Long Term Evolution (LTE) interference cancellation, including RF and/or LTE interference cancellation in a coaxial cable connected DOCSIS system or cable network. The network 300 is similar to the network 100. In various embodiments, the network 300 comprises a noise reduction device 310, a CMTS 330 similar to the CMTS 110, and a CPE 340 similar to the CMs 150 and the STB 152. As shown, an LTE device 320 is located near the network 300. The LTE device 320 may be an LTE base station or an LTE user equipment (UE) configured to transmit and receive LTE signals in pre-determined frequency bands, such as the RF sub-bands 211-216 and 219. For example, the LTE device 320 may transmit an LTE signal via a transmit (Tx) antenna 321 in a frequency band that overlaps with at least a portion of a frequency band employed by the network 300. As shown, a portion of the LTE signal transmitted by the LTE device 320 is leaked into the network 300 at an ingress point 350. For example, the ingress point 350 may correspond to a coax cable, an RF connector, and/or an RF splitter with poor RF shielding. Thus, the LTE signal may interfere with signals transmitted between the CMTS 330 and the CPE 340. The network 300 employs the noise reduction device 310 to cancel and/or minimize interference caused by the LTE signal.

The noise reduction device 310 comprises a signal-to-noise ratio (SNR) monitoring and control unit 311, a signal reconstruction unit 360, a demodulator 313, a tap 315, and a receiver (Rx) antenna 316. The signal reconstruction unit 360 comprises an interference reconstruction unit 361, a fixed delay unit 362, and a signal subtraction unit 363. The noise reduction device 310 is coupled to the CMTS 330 and the CPE 340 via a coax path 381, for example, comprising coaxial cables, such as the coaxial cables 134, and/or other RF components arranged in a similar configuration as shown in the network 100. In addition, the noise reduction device 310 is coupled to the LTE device 320 via a wireless path 382.

As an example, the CMTS 330 transmits a data signal, denoted as $r_u(t)$, to the CPE 340 and the LTE device 320 transmits an LTE signal at a center frequency that overlaps with at least a portion of the frequency of $r_u(t)$. The portion of the LTE signal leaked into the network 300 becomes an interference signal, denoted as $r'_I(t)$, to the data signal, $r_u(t)$. Thus, the noise reduction device 310 may receive an input signal comprising a combination of the interference signal $r'_I(t)$ and the data signal $r_u(t)$ from the coax path 381, where the received input signal, denoted as $r_R(t)$, is expressed as shown below:

$$r_R(t) = r'_I(t) + r_u(t) \qquad (1)$$

In order to perform RF interference cancellation, the noise reduction device 310 is built with the Rx antenna 316 so that the noise reduction device 310 may also receive a LTE signal, denoted as $r_I(t)$, transmitted by the LTE device 320 via the wireless path 382. Thus, the noise reduction device 310 may employ $r_I(t)$ received over the wireless path 382 as a reference signal for interference reconstruction and cancellation. Thus, $r_I(t)$ is referred to as the reference signal. The interference reconstruction unit 361 is coupled to the Rx antenna 316. The interference reconstruction unit 361 comprises hardware logics and/or components configured to generate a cancellation signal, denoted as $r_C(t)$, to match the interference signal $r'_I(t)$ received over the coax path 381. The interference reconstruction unit 361 reconstructs the cancellation signal, $r_C(t)$, based on the reference signal, $r_I(t)$, by adjusting one or more of the amplitude, phase, and delay of the reference signal, $r_I(t)$, as discussed more fully below. It should be noted that although the reference signal, $r_I(t)$, received over the wireless path 382 and the interference signal, $r'_I(t)$, received over the coax path 381, are transmitted from the same signal source (e.g., the LTE device 320), the signal power of $r_I(t)$ may be several magnitudes higher than $r'_I(t)$. In addition, the transmission path, the amplitude attenuation, and phase shift may be different between the two signals, $r_I(t)$ and $r'_I(t)$. Thus, the interference reconstruction unit 361 is used to tune the amplitude, phase, and/or delay of the reference signal, $r_I(t)$, such that the reconstructed cancellation signal, $r_C(t)$, may be similar to the interference signal, $r'_I(t)$.

In various embodiments, the fixed delay unit 362 is inserted into the coax path 381 of the signal reconstruction unit 360. The fixed delay unit 362 is configured to add a fixed delay in the coax path 381. Since delays between the signal path for (e.g., the coax path 381) $r'_I(t)$ and the signal path (e.g., the wireless path 382) $r_I(t)$ may be different, the fixed delay is added into the coax path 381 to prevent the delay of $r'_I(t)$ in the coax path 381 from being less than the delay of $r_I(t)$ in the interference reconstruction path or the wireless path 382. In some embodiments, the fixed delay unit 362 may be configured as a variable delay unit for real-time adjustments. The signal subtraction unit 363 is coupled to the interference reconstruction unit 361 and the fixed delay unit 363. The signal subtraction unit 317 is configured to subtract the cancellation signal, $r_C(t)$, from the received input signal, $r_R(t)$, (e.g., with delays) to produce an output signal, which is an interference cancelled signal, denoted as $s_C(t)$. The interference cancelled signal, $s_C(t)$, is expressed as shown below:

$$s_C(t) = r_R(t) - r_C(t) \qquad (2)$$

Thus, the remaining residual interference signal, denoted as $s_R(t)$, after interference cancellation is expressed as shown below:

$$s_R(t) = r'_I(t) - r_C(t) \qquad\qquad (3)$$

The tap 315 is coupled to the signal subtraction unit 363 and is configured to split the interference cancelled signal, $s_C(t)$, into two signal paths, a first path coupled to the demodulator 313 for interference signal reconstruction control and a second path coupled to the CPE 340.

The demodulator 313 is coupled to the tap 315 and is configured to perform demodulation to recover the transmitted signal, for example, through channel estimation and/or noise estimation, similar to a CM receiver demodulator. The demodulator 313 may compute SNR, signal-to-interference-plus-noise ratio (SINR), and/or MER after demodulation, based on the demodulated signal.

The SNR monitoring and control unit 311 is coupled to the demodulator 313 and the interference reconstruction unit 361. The SNR monitoring and control unit 311 is configured to compute and monitor the SNR, SINR, and/or MER of the demodulated signal and control the interference reconstruction unit 361 (e.g., adjustments of amplitude, phase, and/or delay of $r_I(t)$) according to the computed SNR, SINR, and/or MER. For example, the SNR monitoring and control unit 311 may determine the adjustments by employing a gradient search control method to maximize the SNR of the demodulated signal, as discussed more fully below. The SNR monitoring and control unit 311 may also initiate the cancellation process and or update the adjustments in the interference reconstruction unit 361 when the SNR of the demodulated signal decreases. It should be noted that in some embodiments the fixed delay unit 362 may be replaced by a variable delay unit and the SNR monitoring and control unit 311 may configure the variable delay unit according to delay difference between the wireless path 382 and the coax path 381.

In one embodiment, the noise reduction device 310 is configured as a standalone device as shown in FIG. 3. In another embodiment, the noise reduce device 310 is integrated into an NE, such as the CPE 340, the CMTSs 330 and 110, the CMs 150, the STB 152, the HFC node 130, and/or any other DOCSIS nodes, as an embedded unit. In such an embodiment, the embedded noise reduction device 310 may reuse the NE receiver demodulator instead of a separate demodulator 313. In some embodiments, the noise reduction device 310 may be configured to perform echo cancellation by cancelling interference in the upstream direction from the CPE 340 to the CMTS 330. It should be noted that although the present disclosure describes RF interference cancellation mechanisms for LTE interference, the disclosed mechanisms may be applied to cancel and/or reduce any other type of RF interference.

The noise reduction device 310 in some embodiments comprises a first radio frequency (RF) frontend interface module configured to receive a reference signal via a first signal path, a second RF frontend interface module configured to receive an interference signal via a second signal path, a first signal adjustment chain module configured to reconstruct a first portion of the interference signal by adjusting a first signal property of a first reference signal portion of the reference signal, and a second signal adjustment chain module coupled to the first RF frontend interface module and configured to reconstruct a second portion of the interference signal by adjusting a second signal property of a second reference signal portion of the reference signal, wherein the reference signal and the interference signal are associated with a same source signal.

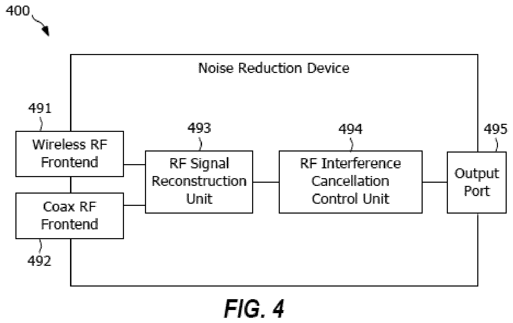

FIG. 4 is a schematic diagram of an embodiment of a noise reduction device 400. The noise reduction device 400 is similar to the noise reduction device 310. The noise reduction device 400 may comprise a wireless RF frontend 491 (e.g., comprising an Rx antenna such as the Rx antenna 316), a coaxial cable frontend 492, an RF signal reconstruction unit 493, a RF interference cancellation control unit 494, and an output port 495. The coaxial frontend 492 is configured to couple to a coaxial cable network, such as the EDN 135. The wireless RF frontend 491 is configured to couple to a nearby RF interference source, such as the LTE device 320, operating at a frequency spectrum that overlaps with the coaxial cable network. The RF interference source may introduce RF interference into the coaxial cable network through low quality and/or poor shielding cables and/or components. The wireless RF frontend 491 is configured to receive a reference signal of the RF interference source. The coaxial cable frontend 492 is configured to receive an input signal from the coaxial cable network, where the input signal may comprise a combined RF interference signal and data signal. The RF signal reconstruction unit 493 is similar to the signal reconstruction unit 360. For example, the RF signal reconstruction unit 493 is configured to dynamically adjust one or more of amplitude, phase, and delay of the received reference signal to cancel the undesirable effect of the RF interference from the received input signal. The RF interference cancellation control unit 494 may comprise components similar to the SNR monitoring and control unit 311 and the demodulator 313. The RF interference cancellation control unit 494 is configured to control amplitude, phase, and/or delay adjustments in the RF signal reconstruction unit 493 to maximize SNRs and/or SINRs of the interference cancelled signal and send the interference cancelled signal to the output port 495. The output port 495 may be coupled to a receiver of a CM, such as the CMs 140. The output port 495 may components similar to the tap 315. In various embodiments, the RF signal reconstruction unit 493 comprises a plurality of signal adjustment chains, each configured to adjust one or more of amplitude, phase, and delay of a portion of the reference signal. In some embodiments, multiple RF interference sources may operate at different frequency bands that overlap with the coaxial cable network. In such embodiments, each signal adjustment chain may be configured to cancel RF interference at a particular frequency band corresponding to an RF interference frequency band. The disclosed embodiments are suitable for use in any cable network nodes for cancelling any type of RF interference.

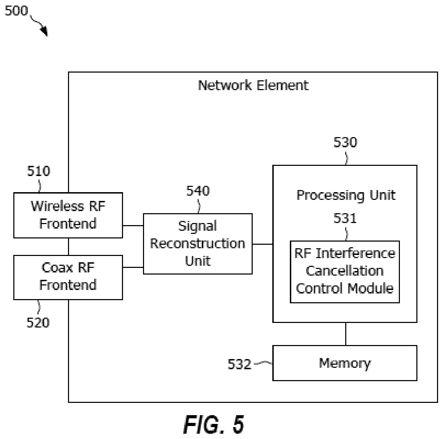

FIG. 5 is a schematic diagram of an embodiment of an NE 500, which may act as a node, such as the CMTSs 110 and 330, the HFC nodes 130, CMs 150, the STB 152, the CPE 340, the noise reduction devices 300 and 310, and/or any other nodes in a coaxial cable network, such as the networks 100 and 300. The NE 500 may be configured to implement and/or support the RF interference reconstruction and/or cancellation mechanisms described herein. One skilled in the art will recognize that the term NE encompasses a broad range of devices of which the NE 500 is merely an example. The NE 500 is included for purposes of clarity of discussion, but is in no way meant to limit the application of the present disclosure to a particular NE embodiment or class of NE embodiments. At least some of the features/methods described in the disclosure may be implemented in a network apparatus or component such as an NE 500. For instance, the features/methods in the disclosure may be implemented using hardware, firmware, and/or software installed to run on hardware.

As shown in FIG. 5, the NE 500 may comprise a wireless RF frontend 510 and a coax RF frontend 520. The wireless RF frontend 510 may comprise RF antennas, such as the Rx antenna 316 and the Tx antenna 321, RF components, RF devices, and/or RF interfaces, which receives and/or transmits wireless RF signals. The coax RF frontend 510 may comprise RF components, RF devices, and/or RF interfaces, which receives and/or transmits RF signals over coax cables. The NE may further comprise a signal reconstruction unit 540, similar to the signal reconstruction unit 360 and 493. The signal reconstruction unit 540 may comprise hardware logic units and/or components configured to perform signal amplitude, phase, and/or delay adjustments. A processing unit 530 may be coupled to the signal reconstruction unit 540. The processing unit 530 may comprise one or more multi-core processors and/or memory devices 532, which may function as data stores, buffers, and the like. The processing unit 530 may be implemented as a general processor or may be part of one or more application specific integrated units (ASICs) and/or digital signal processing processors (DSPs). The processing unit 530 may comprise an RF interference cancellation control module 531, which may implement multi-path search control and RF interference cancellation, such as methods 700 and 800, as discussed more fully below, and/or any other method described herein. In an embodiment, the RF interference cancellation control module 531 may perform similar functions as the RF interference cancellation control unit 494. As such, the inclusion of the RF interference cancellation control module 531 and associated methods and systems provide improvements to the functionality of the NE 500. Further, the RF interference cancellation control module 531 effects a transformation of a particular article (e.g., signals in the network) to a different state. In an alternative embodiment, the RF interference cancellation control module 531 may be implemented as instructions stored in the memory devices 532, which may be executed by the processing unit 530. The memory device 532 may comprise a cache for temporarily storing content, for example, a Random Access Memory (RAM). Additionally, the memory device 532 may comprise a long-term storage for storing content relatively longer, for example, a Read Only Memory (ROM). For instance, the cache and the long-term storage may include dynamic random access memories (DRAMs), solid-state drives (SSDs), hard disks, or combinations thereof.

It is understood that by programming and/or loading executable instructions onto the NE 500, at least one of the processing unit 530 and/or memory device 532 are thereby changed, transforming the NE 500 in part into a particular machine or apparatus, for example, a multi-core forwarding architecture, having the novel functionality taught by the present disclosure. It is fundamental to the electrical engineering and software engineering arts that functionality that can be implemented by loading executable software into a computer can be converted to a hardware implementation by well-known design rules. Decisions between implementing a concept in software versus hardware typically hinge on considerations of stability of the design and numbers of units to be produced rather than any issues involved in translating from the software domain to the hardware domain. Generally, a design that is still subject to frequent change may be preferred to be implemented in software, because re-spinning a hardware implementation is more expensive than re-spinning a software design. Generally, a design that is stable that will be produced in large volume may be preferred to be implemented in hardware, for example in an ASIC, because for large production runs the hardware implementation may be less expensive than the software implementation. Often a design may be developed and tested in a software form and later transformed, by well-known design rules, to an equivalent hardware implementation in an ASIC that hardwires the instructions of the software. In the same manner as a machine controlled by a new ASIC is a particular machine or apparatus, likewise a computer that has been programmed and/or loaded with executable instructions may be viewed as a particular machine or apparatus.

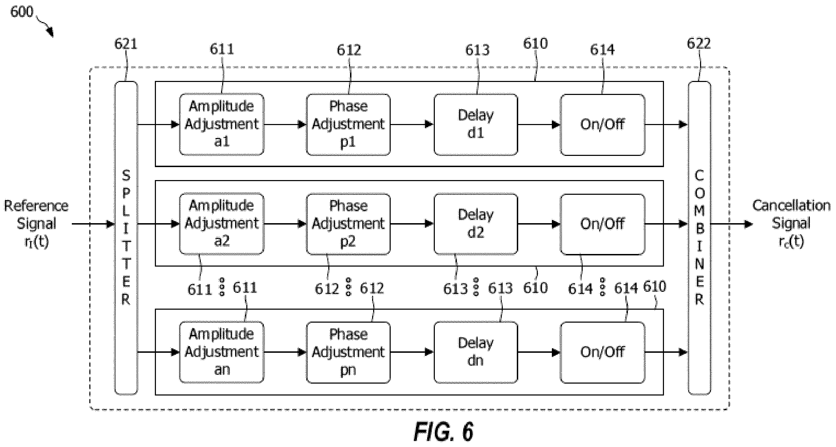

FIG. 6 is a schematic diagram of an embodiment of an RF interference reconstruction unit 600. The RF interference reconstruction unit 600 may be employed by a noise reduction device, such as noise reduction devices 310 and 400, positioned in a network, such as the network 300, and interfered by an interference source, such as the LTE device 320. The RF interference reconstruction unit 600 is similar to the interference reconstruction unit 361 and provides a more detailed view of the internal components. The RF interference reconstruction unit 600 comprises a splitter 621, a plurality of adjustment chains 610, and a combiner 622. In an embodiment, the RF interference reconstruction unit 600 may be implemented via hardware logic circuits.

The RF interference reconstruction unit 600 receives a reference signal, $r_I(t)$, from the interference source at the splitter 621, for example, via a wireless path, such as the wireless path 382, in the network. The splitter 621 may be any device and/or component, such as a power splitter, configured to divide the received reference signal, $r_I(t)$, into a plurality of signals, each coupled to one of the adjustment chains 610.

Each adjustment chain 610 comprises an amplitude adjustment unit 611, a phase adjustment unit 612, a delay unit 613, and an on/off switch unit 614. The amplitude adjustment unit 611 is configured to adjust the amplitude of the signal in the signal path of the adjustment chain 610. The phase adjustment unit 612 is configured to adjust the phase of the signal in the signal path of the adjustment chain 610. The delay adjustment unit 613 is configured to adjust the delay of the signal in the signal path of the adjustment chain 610. The on/off switch unit 614 is configured to enable or disable the adjustment chain 610.

The combiner 622 is coupled to the adjustment chains 610. The combiner 622 may be any device and/or component configured to combine RF signals and output a single RF signal. For example, the combiner 622 may combine the signals received from the adjustment chains 610 into a single RF signal, which may correspond to a cancellation signal, $r_C(t)$, for cancelling an interference

caused by the interference source, for example, received from a coax path, such as the coax path 381, in the network.

In one embodiment, the adjustment chains 610 are configured to account for multi-path effects, where each adjustment chain 610 may be tuned to a certain path (e.g., a fading path). In another embodiment, each adjustment chain 610 is configured to reconstruct an interference signal at a particular frequency band. In such an embodiment, one adjustment chain 610 may be configured to reconstruct an interference signal at a 600 MHz frequency band, while another adjustment chain 610 may be configured to reconstruct an interference sign at a 800 MHz frequency band, where the interference at the 600 MHz and the 800 MHz may be caused by different interference sources or the same interference source. In an embodiment, the number of adjustment chains 610 may be four, where the RF interference reconstruction unit 600 may be configured to account for interference at about four frequency bands of one or more interference sources. In another embodiment, the number of adjustment chains 610 may be 1 to $N$, where the RF interference reconstruction unit 600 may be configured to account for interference for 1 to $N$ frequency bands from 1 to $N$ interference sources, where $N$ can be any positive integer. In various embodiments, the number of adjustment chains 610 may be in the range of two to eight.

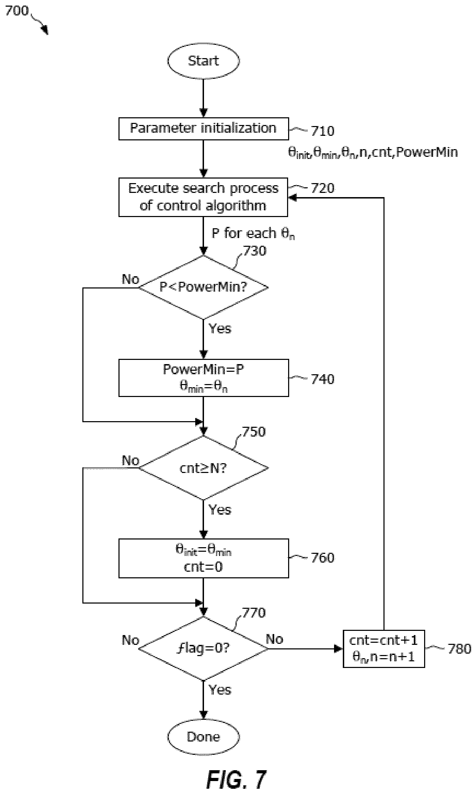

FIG. 7 is a flowchart of an embodiment of a multi-path search control method 700. The method 700 is implemented by an NE, such as the noise reduction devices 310 and 400, the CMTSs 110 and 330, the HFC nodes 130, the CMs 150, the STB 152, the CPE 340, and/or the NE 500, in a network, such as the network 100 and 300. The method 700 is implemented when determining signal amplitude, phase, and/or delay adjustments for an interference reconstruction unit, such as the interference reconstruction units 361 and 600. For example, the method 700 may be employed to determine adjustments for the amplitude adjustment units 611, the phase adjustment units 612, the delay adjustment units 613, and/or the on/off switch units 614. At step 710, search parameters $\theta_{init}$, $\theta_n$, $\theta_{min}$, $n$, $N$, $cnt$, and $PowerMin$ are initialized. The parameter $\theta_n$ represents a set of search points for a control algorithm, such as a stochastic approximation algorithm as described in Chih-Ming Chen, et al., "An Efficient Gradient Forecasting Search Method Utilizing the Discrete Difference Equation Prediction Model", Applied Intelligence 16, 33-58, 2002, J. Kiefer, et al., "Stochastic estimation of the maximum of a regression function", the Annals of Mathematical Statistics Vol. 23, No. 2 (Sep, 1952) pp. 362-466, and "Stochastic Approximation", http://en.wikipedia.org/wiki/Stochastic_approximation, June 2012. For example, $\theta_n = \{x_1, x_2, .., x_p\}$, where $x_i (1 \leq i \leq p)$ may range from values of 0 to $2^{16} - 1$ and may correspond to an amplitude adjustment value, a phase adjustment value, and/or a delay adjustment value and $i$ may correspond to a particular adjustment chain, such as the adjustment chains 610, in the RF interference reconstruction unit 600. For example, when the number of adjustment chains is four, $p$ may be set to a value of four. The parameter $\theta_{init}$ represents an initial search point for the control algorithm to begin a search and the parameter $n$ tracks the search point that is being processed, where $n$ may be initialized to one (e.g., $\theta_{init}$ may begin with $x_1$). The parameter $cnt$ represents a counter employed for tracking the number of processed search points and may be initialized to one. The parameter $\theta_{min}$ represents the optimal point in a search and may be initialized to $\theta_{init}$. The parameter $PowerMin$ represents the optimal residual power and may be initialized to the residual power for the initial search point, $\theta_{init}$. The parameter $N$ represents the maximum number of search iterations for the control algorithm.

At step 720, the control algorithm is executed according to the search parameters. The control algorithm generates a residual power, denoted as $P$, for each search point $\theta_n$. For example, the residual power, $P$, may correspond to the signal power of the residual interference signal, $s_R(t)$, shown in Equation (3) above.

At step 730, after executing the control algorithm, a determination is made whether the residual power, $P$, obtained from the control algorithm is less than the optimal residual power, $PowerMin$.

If the residual power, $P$, is less than the optimal residual power, $PowerMin$, next at step 740, the optimal residual power, $PowerMin$, is set to $P$ and the optimal point, $\theta_{min}$, is set to the current search point, $\theta_n$. Otherwise, the method 700 proceeds to step 750.

At step 750, a determination is made whether the counter, *cnt,* is greater than or equal to the maximum number of search iterations, *N.* If the counter, *cnt,* is greater than or equal to N, next at step 760, the initial search point, $\theta_{init}$, is reset to $\theta_{min}$ and the counter, *cnt,* is reset to zero. Otherwise, the method 700 proceeds to step 770.

At step 770, a determination is made whether a flag is equal to zero, where the flag corresponds to an on/off switch to control the termination of the search and may be an external parameter. If the flag is not equal to zero, next at step 780, the parameters *cnt* and *n* are incremented by one and the method 700 returns to step 720. If the flag is equal to zero, the method 700 terminates.

In an embodiment, a data signal, $r_u(t)$, transmitted by a cable headend, such as the CMTSs 110 and 330, comprises a preamble symbol. The preamble symbol is a pre-determined signal that enables a receiver to synchronize to a transmitter and to estimate the transmission channel from the transmitter to the receiver. Thus, a noise reduction device, such as the noise reduction devices 310 and 400, may measure interference cancellation performance by estimating an SINR of an interference cancelled signal, $s_C(t)$, from the preamble symbol. The SINR is expressed as shown below:

$$SINR = \frac{P_U}{P_{SR} + P_N} \tag{4}$$

where $P_U$, $P_N$, and $P_{SR}$ represent the power of the useful data signal, $r_u(t)$, the noise power in the transmission channel, and the power of the residual interference signal, $s_R(t)$, remained after interference cancellation, respectively.

Thus, an SNR monitoring and control unit, such as the SNR monitoring and control unit 311, may monitor SINR of the interference cancelled signal, $s_C(t)$, and implement a gradient control algorithm, such as the method 700, to adjust an amplitude, $a_c$, a phase shift, $q_c$, and a delay, $t_c$, of an interference reference signal, $r_I(t)$, such that an optimal cancellation signal, $r_C(t)$, may be reconstructed to achieve a maximum SINR for the interference cancelled signal, $s_C(t)$. The maximization of the SINR is expressed as shown below:

$$\max_{a_c,\, t_c,\, q_c} \left\{ \frac{P_U}{P_{SR} + P_N} \right\} \tag{5}$$

The corresponding interference suppression capability, denoted as *G,* may be expressed as shown below:

$$G = 10 \log\left( \frac{E_r + E_N}{E_I + E_N} \right) \tag{6}$$

where $E_R$ is the energy of the residual interference signal, $s_R(t)$, $E_I$ is the energy of the interference signal, $r'_I(t)$, and $E_N$ is the noise energy in the transmission channel. As shown, the suppression capability, *G,* in Equation (6) is in units of decibel (dB). When $E_I$ is significantly greater than $E_N$, *G* is a negative value.

As such, a smaller value of *G* may indicate a higher interference suppression capability. By adjusting the amplitude attenuation, phase shift, and/or delay of the reference signal, $r_I(t)$, the residual interference signal, $s_R(t)$, energy may be reduced to about zero, and thus may achieve a maximum interference suppression capability. The optimal value for *G* may be expressed as shown below:

$$G_{opt} = 10 \log\left( \frac{E_N}{E_I + E_N} \right) \approx 10 \log\left( \frac{E_N}{E_I} \right) \tag{7}$$

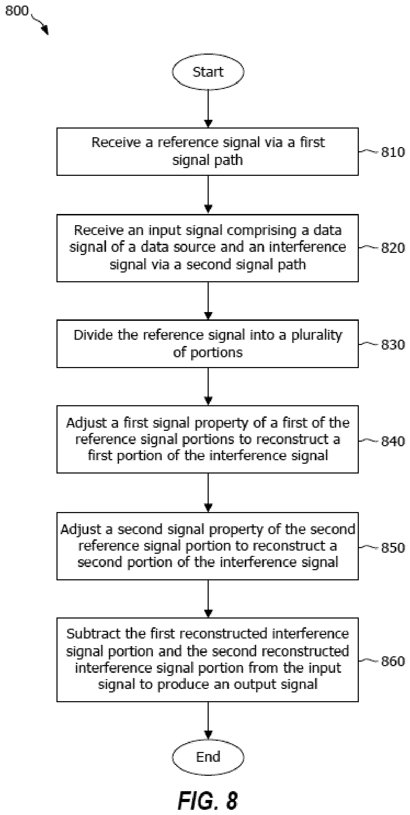

FIG. 8 is a flowchart of an embodiment of a RF interference cancellation method 800. The method 800 is implemented by an NE, such as the noise reduction devices 310 and 400, the CMTSs 110 and 330, the HFC nodes 130, the CMs 150, the STB 152, the CPE 340, and/or the NE 500, in a network, such as the networks 100 and 300. The method 800 employs similar mechanisms as described in the network 300 and the RF interference reconstruction unit 600. The method 800 may be employed in conjunction with the method 700, as described more fully below. The method 800 is implemented when detecting RF interference in the network, for example, when the SINR and/or SNR of a received coaxial signal decreases. At step 810, a reference signal is received via a first signal path. For example, the reference signal corresponds to $r_I(t)$ in the network 300, where $r_I(t)$ is a copy of an LTE signal transmitted by the LTE device 320 and the first signal path corresponds to the wireless path 382. At step 820, an input signal comprising a data signal of a data source and an interference signal via a second signal path. For example, the input signal corresponds to $r_R(t)$, the data signal corresponds to $r_u(t)$, and the interference signal corresponds to $r'_I(t)$ as shown in Equation (1) described above, where the second signal path corresponds to the coax path 381 in the network 300.

At step 830, the reference signal is divided into a plurality of portions, for example, via a splitter, such as the splitter 621. At step 840, a first signal property of a first of the reference signal portions is adjusted to reconstruct a first portion of the interference signal. At step 850, a second signal property of a second of the reference signal portions is adjusted to reconstruct a second portion of the interference signal. For example, the first interference signal portion and/or the second interference signal portion are reconstructed from a signal adjustment chain, such as the signal adjustment chain 610. The signal adjustment chains may adjust signal properties, such as amplitude, phase, and/or delay of the first reference signal portion and/or the second reference signal portion.

At step 860, the first reconstructed interference signal portion and the second reconstructed interference signal portion are subtracted from the input signal to produce an output signal comprising a reduced interference from the interference signal. For example, the output signal corresponds to $s_C(t)$ and is obtained by computing Equation (2) described above, where the first reconstructed interference signal portion and the second reconstructed interference signal portion form portions of the cancellation signal, $r_C(t)$.

In some embodiments, the adjustments for the first signal property and the second signal property may be determined according to SINRs of the output signal after demodulation. For example, a first adjustment for the first signal property may be determined by maximizing a first SINR of the output signal in a first interference band and a second adjustment for the second signal property may be determined by maximizing a second SINR of the output signal in a second interference band different from the first interference frequency band.

In the process of SNR tracking and monitoring, some error sources, such as cable length, amplitude adjustment, and/or phase adjustment, may affect the accuracy of the SNR computations or interference suppression capabilities.

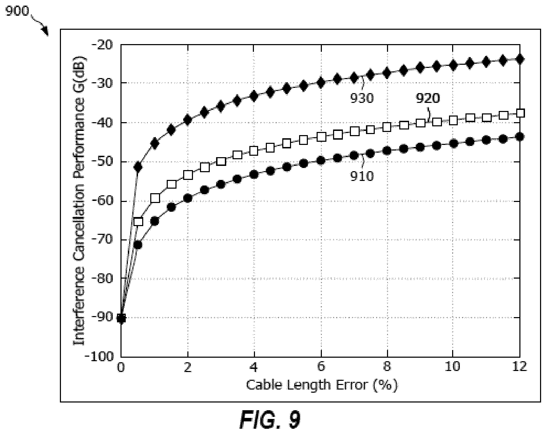

FIG. 9 is a graph 900 illustrating simulated interference cancellation performance in relation to cable length. In graph 900, the x-axis represents cable length error percentage and the y-axis represents interference cancellation performance (e.g., in terms of interference suppression capability, $G$ as described above in Equation (6)) in units of dB. The simulated interference cancellation performance shown in graph 900 is obtained by simulating a noise reduction device, such as the noise reduction device 310 and 400, operating on an LTE interference source, such as the LTE device 320 and computing the amount of interference reduction according to Equation (6).

Curves 910, 920, and 930 represent simulated interference cancellation performance as a function of cable length error percentage for an LTE interference signal at a bandwidth of about 10 MHz, an LTE interference signal at a bandwidth of about 20 MHz, and an LTE-Advanced (LTE-A) interference signal at a bandwidth of about 100 MHz, respectively. It should be noted that graph 900 may assume no error in amplitude adjustment and phase adjustment. As shown in the graph 900, the interference performance decreases when cable length error percentage increases at a fixed bandwidth. By comparing the curves 910, 920, and 930 at a fixed cable length error percentage, the interference suppression capability decreases as the bandwidth increases. As shown in the graph 900, to achieve about 40 dB interference suppression, the 10 MHz LTE interference signal allows a cable length error of about 12 percent (%), the 20 MHz LTE interference signal allows a cable length error of about 8%, and the 100 MHz LTE-A interference signal allows a cable length error of about 2%.

For a fixed interference bandwidth, a residual interference power, $E_{rD}$, may be computed from an amplitude attenuation error $Da$ and a phase error $Dq$ as shown below:

$$E_{rD} = E_I \left[ 1 - \left( 2\cos Dq - 1 \right) \operatorname{sinc}^2 \left( B Dt \right) \right] + 2E_0 B h_{IR} h_I Da \left( 1 - \cos Dq \right) \left| \operatorname{sinc} \left( B Dt \right) \right| + E_0 B h_{IR} Da^2 \tag{8}$$

where $h_{IR}$ and, $h_I$ represent the channel gain of the captured LTE signal, $r_I(t)$, and the interference signal, $r'_I(t)$, respectively. The variable $E_0$ represents the energy from the useful signal, $r_u(t)$, and the variable $B$ represents the bandwidth of the interference signal, $r'_I(t)$.

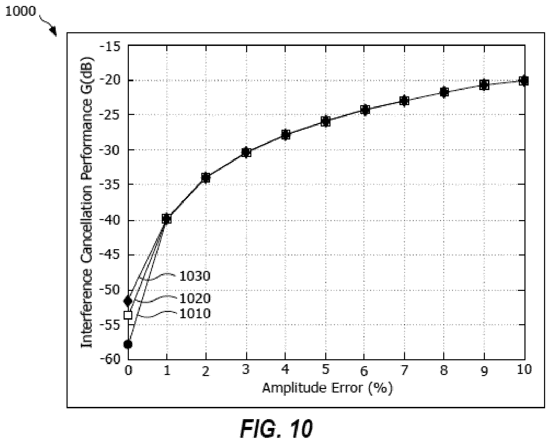

FIG. 10 is a graph 1000 illustrating simulated interference cancellation performance in relation to amplitude error. In graph 1000, the x-axis represents amplitude error percentage and the y-axis represents simulated interference cancellation performance (e.g., in terms of interference suppression capability, $G$, as described above in Equation (6)) in units of dB. The simulated interference cancellation performance shown in graph 1000 is obtained by simulating a noise reduction device, such as the noise reduction device 310 and 400, operating on an LTE interference source, such as the LTE device 320 and computing the amount of interference reduction according to Equation (6). Curves 1010, 1020, and 1030 represent simulated interference cancellation performance as a function of amplitude error percentage for an LTE interference signal at a bandwidth of about 10 MHz, an LTE interference signal at a bandwidth of about 20 MHz, and an LTE-A interference signal at a bandwidth of about 100 MHz, respectively. As shown in graph 1000, the interference cancellation performance decreases when the amplitude error increases at a fixed bandwidth. By comparing the curves 1010, 1020, and 1030 at amplitude error percentages less than about 1%, the interference suppression capability of the 100 MHz LTE-A interference signal is less than the 10 MHz LTE interference signal or the 20 MHz LTE interference signal. When the amplitude error percentage is greater than about 1%, the interference suppression capability of the 10 MHz LTE interference signal, the 20 MHz LTE interference signal, and the 100 MHz LTE-A interference signal are similar.

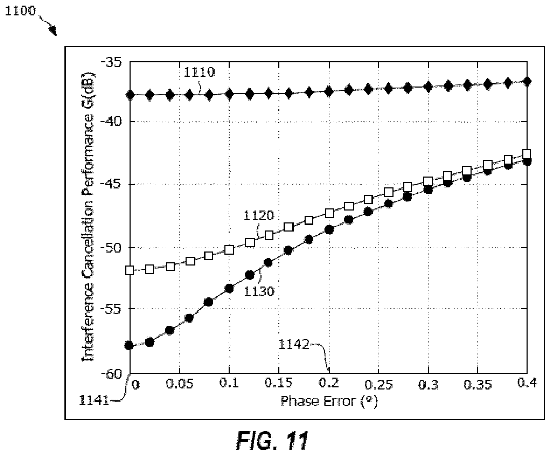

FIG. 11 is a graph 1100 illustrating simulated interference cancellation performance in relation to phase error. In graph 1100, the x-axis represents phase error in units of degrees (°) and the y-axis represents simulated interference cancellation performance (e.g., in terms of interference suppression capability, *G*, as described above in Equation (6)) in units of dB. The simulated interference cancellation performance shown in graph 1100 is obtained by simulating a noise reduction device, such as the noise reduction device 310 and 400, operating on an LTE interference source, such as the LTE device 320 and computing the amount of interference reduction according to Equation (6). Curves 1110, 1120, and 1130 represent simulated interference cancellation performance as a function of phase error for an LTE interference signal at a bandwidth of about 100 MHz, an LTE interference signal at a bandwidth of about 20 MHz, and an LTE-A interference signal at a bandwidth of about 10 MHz, respectively. As shown in graph 1100, the interference suppression capability decreases when the phase error increases at a fixed bandwidth. For example, when the phase error increases from 0° (shown as 1141) to 0.2° (shown as 1142), the interference suppression capability reduces by about 3.6 dB for the 20 MHz LTE interference signal and by about 0.5 dB for the 100 MHz LTE-A interference signal.

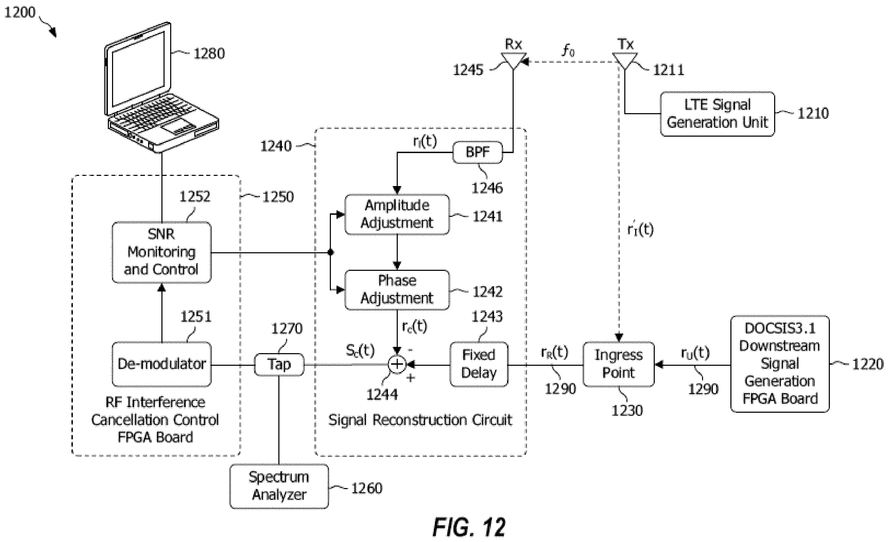

FIG. 12 is a schematic diagram of an embodiment of an experimental setup 1200 for measuring RF interference cancellation performance. The setup 1200 is configured in a similar configuration as in the network 300. The setup 1200 comprises an LTE signal generation unit 1210, a DOCSIS 3.1 downstream signal generation field-programmable gate array (FPGA) board 1220, an interference ingress point 1230, a signal reconstruction circuit 1240, and an RF interference cancellation control FPGA board 1250. The LTE signal generation unit 1210 is configured to generate a 20MHz LTE signal at an EIRP between about 10 dBm and 27 dBm. The LTE signal generation unit 1210 comprises a Tx antenna 1211 similar to the Tx antenna 321 configured to transmit the generated 20 MHz LTE signal. The FPGA board 1220 is configured to generate a downstream signal (e.g., $r_u(t)$) similar to a CATV downstream signal generated by a CMTS, such as the CMTSs 110 and 330. The ingress point 1230 may emulate a low quality RF components or cables with poor RF shielding by attaching an Rx antenna similar to the Rx antenna 316 to pick up a portion of the LTE signal (e.g., $r'_I(t)$) generated by the LTE signal generation unit. The signal reconstruction circuit 1240 is similar to the signal reconstruction unit 360. For example, the signal reconstruction circuit 1240 comprises an amplitude adjustment unit 1241 similar to the amplitude adjustment unit 611, a phase adjustment 1242 similar to the phase adjustment unit 612, a signal subtraction unit 1243 similar to the signal subtraction unit 363, a fixed delay unit 1244 similar to the fixed delay unit 362, a Rx antenna 1245 similar to the Rx antenna 316, and a band pass filter (BPF) 1246. The FPGA board 1250 implements a demodulator 1251 similar to the demodulator 313 and an SNR monitoring and control unit 1252 similar to the SNR monitoring and control unit 311.

The signal reconstruction circuit 1240 is coupled to the FPGA board 1220 and the ingress point 1230, via coax cables 1290, such as the coax cables 134. The signal reconstruction circuit 1240 receives an input signal (e.g., $r_R(t)$) comprising a combined $r'_I(t)$ and $r_u(t)$. The signal reconstruction circuit 1240 is coupled to the LTE generation unit 1210 via the Rx antenna 1245 and the BPF 1246. The signal reconstruction circuit 1240 is configured to receive a copy of the LTE signal (e.g., $r_I(t)$) transmitted by the LTE generation unit 1210, where the BPF 1246 may be employed to capture the signal bandwidth of interest. The signal reconstruction circuit 1240 reconstructs an interference cancellation signal (e.g., $r_C(t)$) by adjusting the amplitude and the phase of $r_I(t)$ via the amplitude adjustment unit 1241 and the phase adjustment unit 1242. After reconstructing $r_C(t)$, an output signal (e.g, $s_C(t)$) is produced by subtracting $r_C(t)$ from $r_R(t)$ as described above in Equation (2) via the signal subtraction unit 1244.

A tap 1270 is positioned between the signal reconstruction circuit 1240 and the FPGA board 1250. A spectrum analyzer 1260 is coupled to the tap 1270. The tap 1270 divides the output signal into two signals, where one of the signals is sent to the FPGA board 1250 for demodulation and SNR monitoring and adjustment control and the other signal is sent to the spectrum analyzer 1260 for performance measurements (e.g., signal power, interference signal power, and residual interference signal power). For example, the demodulator 1251 may demodulate the output signal, $s_C(t)$, generated by the signal reconstruction circuit 1240. The SNR monitoring and control unit 1252 may monitor SNR of the demodulated signal and control the signal reconstruction circuit 1240. A computing device 1280, such as a laptop computer, may be coupled to the FPGA board 1250, where the computing device 1280 may monitor and capture constellation maps, SNRs, SINRs, and/or MERs of the demodulated signal.

In an embodiment, the performance of the signal reconstruction circuit 1240 may be determined based on interference suppression capability, for example, by measuring interference ingress power and residual inference power. The interference ingress power is measured at the spectrum analyzer 1260 when transmission at the FPGA board 1220 and interference cancellation at the signal reconstruction circuit 1240 are disabled and transmission at the LTE signal generation unit is enabled. The residual inference power is measured at the spectrum analyzer 1260 when the transmission at the FPGA board 1220 is disabled and transmission at the LTE signal generation unit and interference cancellation at the signal reconstruction circuit 1240 are enabled. Thus, the interference suppression capability is determined by subtracting the measured interference residual power from the measured interference ingress power. The interference suppression capability may be measured for different levels of interference ingress power, for example, by varying the transmit power level of the LTE signal generation unit 1210.

In an embodiment, the performance of the signal reconstruction circuit 1240 may be determined based on three sets of MERs. For example, a first set of the MERs corresponding to MERs in an interference-free channel may be measured across a signal bandwidth by enabling transmission at the FPGA board 1220 and disabling transmission at the LTE signal generation unit 1210 and interference cancellation at the signal reconstruction circuit 1240. A second set of the MERs corresponding to MERs in a channel affected by interference may be measured by enabling transmission at the FPGA board 1220 and the LTE signal generation unit 1210 and disabling interference cancellation at the signal reconstruction circuit 1240 is disabled. A third set of the MERs corresponding to MERs in an interference affected channel with cancellation may be measured by enabling transmission at the FPGA board 1220 and the LTE signal generation unit 1210, as well as interference cancellation at the signal reconstruction circuit 1240.

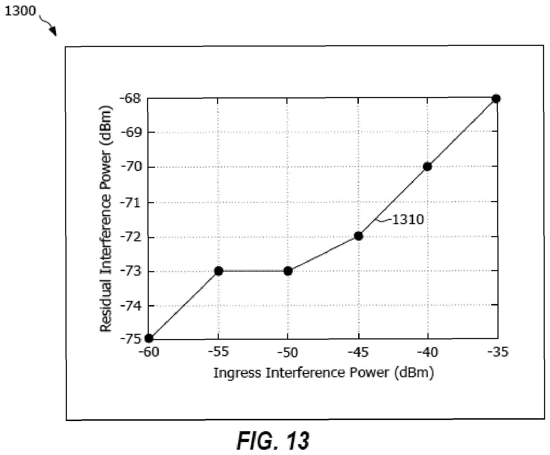

FIG. 13 is a graph 1300 illustrating measured residual interference power as a function of ingress interference power. In the graph 1300, the x-axis represents ingress interference power in units of dBm and the y-axis represents residual interference power in units of dBm. Curve 1310 plots the measured residual interference power obtained from the experimental set up 1200 as a function of ingress interference power. For example, the LTE signal generation unit 1210 generates an LTE signal centered at about 725 MHz with a bandwidth of about 20 MHz. The ingress interference signal power at the ingress point 1230 is configured to vary from about -60 dBm to about -35 dBm at 5 dBm step. The residual interference signal power is measured at the output of the signal reconstruction circuit 1240 via the spectrum analyzer 1260.

As shown in the graph 1300, when the ingress interference power is about -35dBm, the residual power after interference cancellation is about -68dBm, where the interference suppression is about 23dB. When the ingress power reduces from about -35dBm to about -60dBm, the interference suppression performance decreases by about 15dB. The decrease in cancellation performance may be due to cable length error, amplitude error, and/or phase error, as described above in the graphs 900, 1000, and 1100. In addition, thermal noise floor (e.g., in the cables) may lead to inaccuracies. For example, when the ingress power is weak, the residual interference power may be substantially close to the thermal noise floor, and thus may affect the accuracies of the interference suppression performance.

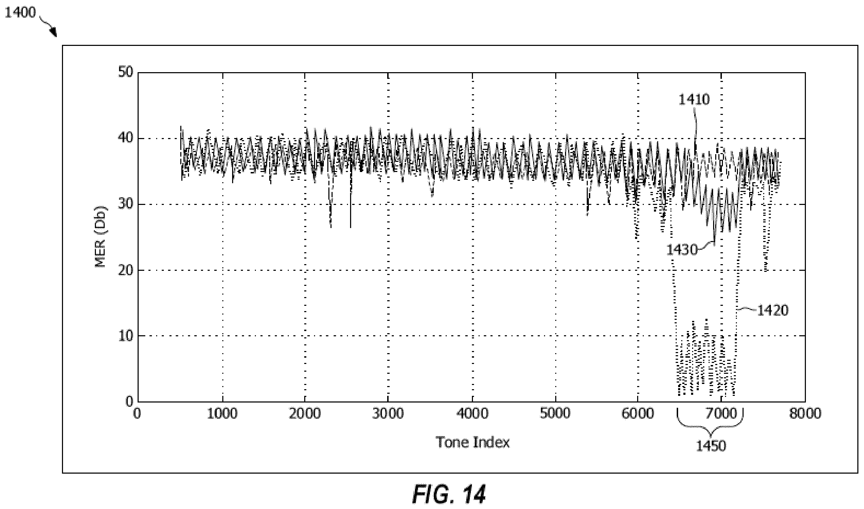

FIG. 14 is a graph 1400 illustrating measured MERs as a function of frequency tone indices. In the graph 1400, the x-axis represents frequency tone indices and the y-axis represents MERs in units of dB. Curve 1410 plots the measured MER obtained from the experimental set up 1200 as a function of frequency tone indices without interference, for example, by disabling the LTE signal generation unit 1210. Curve 1420 plots the measured MER obtained from the experimental set up 1200 as a function of frequency tone indices when interference is present, for example, by enabling the LTE signal generation unit 1210. Curve 1430 plots the measured MER obtained from the experimental set up 1200 as a function of frequency tone indices when interference is present, for example, by enabling the LTE signal generation unit 1210, and interference cancellation is performed, for example, by enabling the signal reconstruction circuit 1240. By comparing the curves 1410, 1420, and the 1430 at frequency region 1450, significant interference suppression improvement is achieved with interference cancellation performed by the signal reconstruction circuit 1240.

While several embodiments have been provided in the present disclosure, it should be understood that the disclosed systems and methods might be embodied in many other specific forms without departing from or scope of the present disclosure.

In addition, techniques, systems, subsystems, and methods described and illustrated in the various embodiments as discrete or separate may be combined or integrated with other systems, modules, techniques, or methods without departing from the scope of the present disclosure. Other items shown or discussed as coupled or directly coupled or communicating with each other may be indirectly coupled or communicating through some interface, device, or intermediate component whether electrically, mechanically, or otherwise. Other examples of changes, substitutions, and alterations are ascertainable by one skilled in the art and could be made without departing from the spirit and scope disclosed herein.

## Claims

1. An apparatus comprising:

   a first radio frequency, RF, frontend interface (510) configured to receive a reference signal via a first signal path;
   a second RF frontend interface (520) configured to receive an input signal comprising a data signal of a data source and an interference signal via a second signal path;
a first signal adjustment chain coupled to the first RF frontend interface (510) and configured to receive the reference signal and reconstruct a first portion of the interference signal by adjusting a first signal property of a first reference signal portion of the reference signal; and
a second signal adjustment chain coupled to the first RF frontend interface (510) and configured to receive the reference signal and reconstruct a second portion of the interference signal by adjusting a second signal property of a second reference signal portion of the reference signal,
wherein the first and second signal adjustment chains each comprise an on/off switch (614) configured to selectively enable an adjustment in the respective signal adjustment chain, and
wherein the reference signal and the interference signal are associated with a same source signal;
wherein the apparatus further comprises:

a signal combiner (622) coupled to the first signal adjustment chain (510) and the second signal adjustment chain (520), wherein the signal combiner (622) is configured to combine the first reconstructed interference signal portion and the second reconstructed interference signal portion to produce a cancellation signal;
a signal subtraction unit (363) coupled to the second RF frontend (520) and the signal combiner (622), wherein the signal subtraction unit (363) is configured to subtract the cancellation signal from the received input signal to produce an output signal; and
a processing unit (530) coupled to the signal subtraction unit, the first signal adjustment chain, and the second signal adjustment chain, wherein the processing unit is configured to:

compute a first signal-to-noise ratio, SNR, of the output signal; and
determine a first adjustment value for adjusting the first signal property of the first reference signal portion in the first signal adjustment chain according to the first SNR.

2. The apparatus of claim 1, wherein the first signal property comprises an amplitude of the first reference signal portion, and wherein the first signal adjustment chain comprises an amplitude adjustment unit configured to adjust the amplitude of the first reference signal portion.

3. The apparatus of any of claims 1 to 2, wherein the first signal property comprises a phase of the first reference signal portion, and wherein the first signal adjustment chain comprises a phase adjustment unit configured to adjust the phase of the first reference signal portion.

4. The apparatus of any of claims 1 to 3, wherein the first signal property comprises a delay of the first reference signal portion, and wherein the first signal adjustment chain comprises a delay adjustment unit configured to adjust the delay of the first reference signal portion.

5. The apparatus of claim 1, further comprising a delay unit (362) coupled between the second RF frontend and the signal subtraction unit (363), wherein the delay unit (362) is configured to delay the received input signal.

6. The apparatus of claim 1, wherein the first SNR is associated with a first frequency band of the interference signal, and wherein the processing unit (530) is further configured to:

compute a second SNR of the output signal in a second frequency band of the interference signal, wherein the first frequency band and the second frequency band span different frequencies; and
determine a second adjustment value for adjusting the second signal property of the second reference signal portion in the second signal adjustment chain according to the second SNR in the second frequency band.

7. The apparatus of any of claims 1 to 6, wherein the first signal path is a wireless RF path, and wherein the second signal path is a coaxial cable path in a Data Over Cable Service Interface Specification, DOCSIS, network.

8. A method implemented in a network element NE, comprising:

receiving a reference signal (810) via a first signal path;
receiving an input signal (820) comprising a data signal of a data source and an interference signal via a second signal path;
dividing the reference signal (830) into a plurality of reference signal portions;
adjusting a first signal property (840) of a first of the reference signal portions to reconstruct a first portion of the interference signal, wherein the adjusting the first signal property is selectively enabled;
adjusting a second signal property (850) of a second of the reference signal portions to reconstruct a second portion of the interference signal, wherein the adjusting the second signal property is selectively enabled; and subtracting (860) the first reconstructed interference signal portion and the second reconstructed interference signal portion from the input signal to produce an output signal comprising a reduced interference from the interference signal,
wherein the reference signal and the interference signal are associated with a same source signal;
the method further comprising delaying the input signal prior to subtracting the first reconstructed interference signal portion and the second reconstructed interference signal portion from the input signal;
demodulating the output signal to produce a demodulated signal; and
determining a first adjustment value for adjusting the first signal property of the first reference signal portion in the first signal adjustment chain by maximizing a first signal-to-interference-plus-noise ratio SINR of the demodulated signal in a first frequency band of the interference signal.

9. The method of claim 8, wherein the first signal property comprises an amplitude of the first signal, a phase of the first signal, and a delay of the first reference signal portions.

10. The method of claim 8:
wherein the determining a first adjustment value for adjusting the first signal property comprises determining an amplitude adjustment value, a phase adjustment value, and a delay adjustment value for adjusting the first signal property of the first reference signal portions by employing a gradient control algorithm to maximize signal-to-interference-plus-noise ratio (SINR) of the demodulated signal.

11. The method of claim 8, further comprising:

determining a second adjustment value for adjusting the second signal property of the second reference signal portion in the second signal adjustment chain by maximizing a second SINR of the demodulated signal in a second frequency band of the interference signal,
wherein the first frequency band is different from the second frequency band.

12. The method of claim 8, wherein the first signal path is a wireless radio frequency RF path, and wherein the second signal path is a coaxial cable path.

**Patentansprüche**

1. Vorrichtung, die Folgendes umfasst:

eine erste Funkfrequenz(RF)-Frontendschnittstelle (510), die dazu ausgelegt ist, via einen ersten Signalpfad ein Referenzsignal zu empfangen;
eine zweite RF-Frontendschnittstelle (520), die dazu ausgelegt ist, via einen zweiten Signalpfad ein Eingangssignal, das ein Datensignal einer Datenquelle und ein Interferenzsignal umfasst, zu empfangen;
eine erste Signalanpassungskette, die an die erste RF-Frontendschnittstelle (510) gekoppelt ist und dazu ausgelegt ist, das Referenzsignal zu empfangen und einen ersten Abschnitt des Interferenzsignals durch Anpassen einer ersten Signaleigenschaft eines ersten Referenzsignalabschnitts des Referenzsignals zu rekonstruieren; und
eine zweite Signalanpassungskette, die an die erste RF-Frontendschnittstelle (510) gekoppelt ist und dazu ausgelegt ist, das Referenzsignal zu empfangen und einen zweiten Abschnitt des Interferenzsignals durch Anpassen einer zweiten Signaleigenschaft eines zweiten Referenzsignalabschnitts des Referenzsignals zu rekonstruieren,
wobei die erste und die zweite Signalanpassungskette jeweils einen Ein-/Ausschalter (614) umfassen, der dazu ausgelegt ist, eine Anpassung in der jeweiligen Signalanpassungskette selektiv zu ermöglichen, und
wobei das Referenzsignal und das Interferenzsignal mit einem selben Quellsignal verknüpft sind;
wobei die Vorrichtung ferner Folgendes umfasst:

einen Signalkombinierer (622), der an die erste Signalanpassungskette (510) und die zweite Signalanpassungskette (520) gekoppelt ist, wobei der Signalkombinierer (622) dazu ausgelegt ist, den ersten rekonstruierten Interferenzsignalabschnitt und den zweiten rekonstruierten Interferenzsignalabschnitt zu kombinieren, um ein Unterdrückungssignal zu produzieren;
eine Signalsubtraktionseinheit (363), die an das zweite RF-Frontend (520) und den Signalkombinierer (622) gekoppelt ist, wobei die Signalsubtraktionseinheit (363) dazu ausgelegt ist, das Unterdrückungssignal vom empfangenen Eingangssignal zu subtrahieren, um ein Ausgangssignal zu produzieren; und
eine Verarbeitungseinheit (530), die an die Signalsubtraktionseinheit, die erste Signalanpassungskette und die zweite Signalanpassungskette gekoppelt ist, wobei die Verarbeitungseinheit zu Folgendem ausgelegt ist:
Berechnen eines ersten Signal-Rausch-Verhältnisses, SNR, des Ausgangssignals und Bestimmen eines ersten Anpassungswertes zum Anpassen der ersten Signaleigenschaft des ersten Referenzsignalabschnitts in der ersten Signalanpassungskette gemäß dem ersten SNR.

2. Vorrichtung nach Anspruch 1, wobei die erste Signaleigenschaft eine Amplitude des ersten Referenzsignalabschnitts umfasst und wobei die erste Signalanpassungskette eine Amplitudenanpassungseinheit umfasst, die dazu ausgelegt ist, die Amplitude des ersten Referenzsignalabschnitts anzupassen.

3. Vorrichtung nach einem der Ansprüche 1 bis 2, wobei die erste Signaleigenschaft eine Phase des ersten Referenzsignalabschnitts umfasst und wobei die erste Signalanpassungskette eine Phasenanpassungseinheit umfasst, die dazu ausgelegt ist, die Phase des ersten Referenzsignalabschnitts anzupassen.

4. Vorrichtung nach einem der Ansprüche 1 bis 3, wobei die erste Signaleigenschaft eine Verzögerung des ersten Referenzsignalabschnitts umfasst und wobei die erste Signalanpassungskette eine Verzögerungsanpassungseinheit umfasst, die dazu ausgelegt ist, die Verzögerung des ersten Referenzsignalabschnitts anzupassen.

5. Vorrichtung nach Anspruch 1, die ferner eine Verzögerungseinheit (362) umfasst, die zwischen dem zweiten RF-Frontend und der Signalsubtraktionseinheit (363) gekoppelt ist, wobei die Verzögerungseinheit (362) dazu ausgelegt ist, das empfangene Eingangssignal zu verzögern.

6. Vorrichtung nach Anspruch 1, wobei das erste SNR mit einem ersten Frequenzband des Interferenzsignals verknüpft ist und wobei die Verarbeitungseinheit (530) ferner zu Folgendem ausgelegt ist:

Berechnen eines zweiten SNR des Ausgangssignals in einem zweiten Frequenzband des Interferenzsignals, wobei das erste Frequenzband und das zweite Frequenzband unterschiedliche Frequenzen überspannen; und
Bestimmen eines zweiten Anpassungswertes zum Anpassen der zweiten Signaleigenschaft des zweiten Referenzsignalabschnitts in der zweiten Signalanpassungskette gemäß dem zweiten SNR im zweiten Frequenzband.

7. Vorrichtung nach einem der Ansprüche 1 bis 6, wobei der erste Signalpfad ein drahtloser RF-Pfad ist und wobei der zweite Signalpfad ein Koaxialkabelpfad in einem Daten-über-Kabel-Dienstschnittstellenspezifikations(DOCSIS)-Netzwerk ist.

8. Verfahren das in einem Netzwerkelement NE implementiert ist und Folgendes umfasst:

Empfangen eines Referenzsignals (810) via einen ersten Signalpfad;
Empfangen eines Eingangssignals (820), das ein Datensignal einer Datenquelle und ein Interferenzsignal umfasst, via einen zweiten Signalpfad;
Teilen des Referenzsignals (830) in eine Vielzahl von Referenzsignalabschnitten;
Anpassen einer ersten Signaleigenschaft (840) eines ersten der Referenzsignalabschnitte, um einen ersten Abschnitt des Interferenzsignals zu rekonstruieren, wobei das Anpassen der ersten Signaleigenschaft selektiv aktiviert wird;
Anpassen einer zweiten Signaleigenschaft (850) eines zweiten der Referenzsignalabschnitte, um einen zweiten Abschnitt des Interferenzsignals zu rekonstruieren, wobei das Anpassen der zweiten Signaleigenschaft selektiv aktiviert wird; und
Subtrahieren (860) des ersten rekonstruierten Interferenzsignalabschnitts und des zweiten rekonstruierten Interferenzsignalabschnitts vom Eingangssignal, um ein Ausgangssignal, das eine reduzierte Interferenz umfasst, aus dem Interferenzsignal zu produzieren,
wobei das Referenzsignal und das Interferenzsignal mit einem selben Quellsignal verknüpft sind;
wobei das Verfahren vor dem Subtrahieren des ersten rekonstruierten Interferenzsignalabschnitts und des zweiten rekonstruierten Interferenzsignalabschnitts vom Eingangssignal ein Verzögern des Eingangssignals umfasst;

Demodulieren des Ausgangssignals, um ein demoduliertes Signal zu produzieren; und

Bestimmen eines ersten Anpassungswertes zum Anpassen der ersten Signaleigenschaft des ersten Referenzsignalabschnitts in der ersten Signalanpassungskette durch Maximieren eines ersten Signal-zu-Interferenzplus-Rausch-Verhältnisses SINR des demodulierten Signals in einem ersten Frequenzband des Interferenzsignals.

9. Verfahren nach Anspruch 8, wobei die erste Signaleigenschaft eine Amplitude des ersten Signals, eine Phase des ersten Signals und eine Verzögerung der ersten Referenzsignalabschnitte umfasst.

10. Verfahren nach Anspruch 8:

wobei das Bestimmen eines ersten Anpassungswertes zum Anpassen der ersten Signaleigenschaft das Anpassen eines Amplitudenanpassungswertes, eines Phasenanpassungswertes und eines Verzögerungsanpassungswertes zum Anpassen der ersten Signaleigenschaft der ersten Referenzsignalabschnitte durch Einsetzen eines Gradientensteueralgorithmus, um ein Signal-zu-Interferenz-plus-RauschVerhältnis (SINR) des demodulierten Signals zu maximieren, umfasst.

11. Verfahren nach Anspruch 8, das ferner Folgendes umfasst:

Bestimmen eines zweiten Anpassungswertes zum Anpassen der zweiten Signaleigenschaft des zweiten Referenzsignalabschnitts in der zweiten Signalanpassungskette durch Maximieren eines zweiten SINR des demodulierten Signals in einem zweiten Frequenzband des Interferenzsignals,

wobei das erste Frequenzband sich vom zweiten Frequenzband unterscheidet.

12. Verfahren nach Anspruch 8, wobei der erste Signalpfad ein drahtloser Funkfrequenz(RF)-Pfad ist und wobei der zweite Signalpfad ein Koaxialkabelpfad ist.

## Revendications

1. Appareil comprenant :

une première interface frontale de fréquence radio, RF (510) conçue pour recevoir un signal de référence par l'intermédiaire d'un premier trajet de signal ;

une seconde interface frontale RF (520) conçue pour recevoir un signal d'entrée comprenant un signal de données d'une source de données et un signal d'interférence par l'intermédiaire d'un second trajet de signal ;

une première chaîne de réglage de signal couplée à la première interface frontale RF (510) et conçue pour recevoir le signal de référence et reconstruire une première partie du signal d'interférence en réglant une première propriété de signal d'une première partie de signal de référence du signal de référence ; et

une seconde chaîne de réglage de signal couplée à la première interface frontale RF (510) et conçue pour recevoir le signal de référence et reconstruire une seconde partie du signal d'interférence en réglant une seconde propriété de signal d'une seconde partie de signal de référence du signal de référence,

dans lequel les première et seconde chaînes de réglage de signal comprennent chacune un commutateur marche/arrêt (614) conçu pour permettre de manière sélective un réglage dans la chaîne de réglage de signal respective, et

dans lequel le signal de référence et le signal d'interférence sont associés à un même signal source ;

dans lequel l'appareil comprend en outre :

un combineur de signaux (622) couplé à la première chaîne de réglage de signal (510) et à la seconde chaîne de réglage de signal (520), le combineur de signaux (622) étant conçu pour combiner la première partie de signal d'interférence reconstruite et la seconde partie de signal d'interférence reconstruite pour produire un signal d'annulation ;

une unité de soustraction de signal (363) couplée à la seconde interface frontale RF (520) et au combineur de signaux (622), l'unité de soustraction de signal (363) étant conçue pour soustraire le signal d'annulation du signal d'entrée reçu afin de produire un signal de sortie ; et

une unité de traitement (530) couplée à l'unité de soustraction de signal, à la première chaîne de réglage de signal, et à la seconde chaîne de réglage de signal, l'unité de traitement étant conçue pour :

calculer un premier rapport signal sur bruit, SNR, du signal de sortie ; et

déterminer une première valeur de réglage permettant de régler la première propriété de signal de la première partie de signal de référence dans la première chaîne de réglage de signal en fonction du premier SNR.

**2.** Appareil selon la revendication 1, dans lequel la première propriété de signal comprend une amplitude de la première partie de signal de référence, et la première chaîne de réglage de signal comprenant une unité de réglage d'amplitude conçue pour régler l'amplitude de la première partie de signal de référence.

**3.** Appareil selon l'une quelconque des revendications 1 à 2, dans lequel la première propriété de signal comprend une phase de la première partie de signal de référence, et la première chaîne de réglage de signal comprenant une unité de réglage de phase conçue pour régler la phase de la première partie de signal de référence.

**4.** Appareil selon l'une quelconque des revendications 1 à 3, dans lequel la première propriété de signal comprend un retard de la première partie de signal de référence, et la première chaîne de réglage de signal comprenant une unité de réglage de retard conçue pour régler le retard de la première partie de signal de référence.

**5.** Appareil selon la revendication 1, comprenant en outre une unité de retard (362) couplée entre la seconde interface frontale RF et l'unité de soustraction de signal (363), l'unité de retard (362) étant conçue pour retarder le signal d'entrée reçu.

**6.** Appareil selon la revendication 1, dans lequel le premier SNR est associé à une première bande de fréquences du signal d'interférence, et l'unité de traitement (530) étant conçue en outre pour :

calculer un second SNR du signal de sortie dans une seconde bande de fréquences du signal d'interférence, la première bande de fréquences et la seconde bande de fréquences couvrant des fréquences différentes ; et

déterminer une seconde valeur de réglage permettant de régler la seconde propriété de signal de la seconde partie de signal de référence dans la seconde chaîne de réglage de signal selon le second SNR dans la seconde bande de fréquences.

**7.** Appareil selon l'une quelconque des revendications 1 à 6, dans lequel le premier trajet de signal est un trajet RF sans fil, et le second trajet de signal étant un trajet de câble coaxial dans un réseau de spécification d'interface de service de données sur câble, DOCSIS.

**8.** Procédé mis en oeuvre dans un élément de réseau NE, consistant à :

recevoir un signal de référence (810) par l'intermédiaire d'un premier trajet de signal ;

recevoir un signal d'entrée (820) comprenant un signal de données d'une source de données et un signal d'interférence par l'intermédiaire d'un second trajet de signal ;

diviser le signal de référence (830) en une pluralité de parties de signal de référence ;

régler une première propriété de signal (840) d'une première partie parmi les parties de signal de référence pour reconstruire une première partie du signal d'interférence, le réglage de la première propriété de signal étant permis de manière sélective ;

régler une seconde propriété de signal (850) d'une seconde partie parmi les parties de signal de référence pour reconstruire une seconde partie du signal d'interférence, le réglage de la seconde propriété de signal étant permis de manière sélective ; et

soustraire (860) la première partie de signal d'interférence reconstruite et la seconde partie de signal d'interférence reconstruite du signal d'entrée pour produire un signal de sortie comprenant une interférence réduite à partir du signal d'interférence,

dans lequel le signal de référence et le signal d'interférence sont associés à un même signal source ;

le procédé consistant en outre à retarder le signal d'entrée avant la soustraction de la première partie de signal d'interférence reconstruite et de la seconde partie de signal d'interférence reconstruite du signal d'entrée ;

démoduler le signal de sortie pour produire un signal démodulé ; et

déterminer une première valeur de réglage permettant de régler la première propriété de signal de la première partie de signal de référence dans la première chaîne de réglage de signal en maximisant un premier rapport signal sur interférence plus bruit SINR du signal démodulé dans une première bande de fréquences du signal d'interférence.

9. Procédé selon la revendication 8, dans lequel la première propriété de signal comprend une amplitude du premier signal, une phase du premier signal, et un retard des premières parties de signal de référence.

10. Procédé selon la revendication 8 :
dans lequel la détermination d'une première valeur de réglage permettant de régler la première propriété de signal consiste à déterminer une valeur de réglage d'amplitude, une valeur de réglage de phase, et une valeur de réglage de retard permettant de régler la première propriété de signal des premières parties de signal de référence en utilisant un algorithme de commande de gradient pour maximiser le rapport signal sur interférence plus bruit (SINR) du signal démodulé.

11. Procédé selon la revendication 8, consistant en outre à :

déterminer une seconde valeur de réglage permettant de régler la seconde propriété de signal de la seconde partie de signal de référence dans la seconde chaîne de réglage de signal en maximisant un second SINR du signal démodulé dans une seconde bande de fréquences du signal d'interférence,
dans lequel la première bande de fréquences est différente de la seconde bande de fréquences.

12. Procédé selon la revendication 8, dans lequel le premier trajet de signal est un trajet de fréquences radio RF sans fil, et dans lequel le second trajet de signal est un trajet de câble coaxial.

*FIG. 1*

FIG. 2

200

| 230 | | |
|---|---|---|
| 52 | Various 698-704 MHz | 211 |
| 53 54 | AT&T 704-716 MHz | 212 |
| 55 56 | Qualcomm 716-728 MHz | 213 |
| 57 | Various 728-734 MHz | 214 |
| 58 59 | AT&T 734-746 MHz | 215 |
| 60 61 | Verizon 746-757 MHz | 216 |
| 62 | D-block 758-763 MHz | 217 |
| 63 64 | Public safety 763-775 MHz | 218 |
| 65 66 | Verizon 776-787 MHz | 219 |
| 67 | D-block 788-793 MHz | 220 |
| 68 69 | Public safety 793-805 MHz | 221 |

Frequencies →

FIG. 3

400

Noise Reduction Device

491

Wireless RF
Frontend

493

RF Signal
Reconstruction
Unit

494

RF Interference
Cancellation
Control Unit

495

Output
Port

Coax RF
Frontend

492

**FIG. 4**

500

Network Element

530

510

540

Processing Unit

Wireless RF
Frontend

531

Signal
Reconstruction
Unit

RF Interference
Cancellation
Control Module

Coax RF
Frontend

520

532 ─ Memory

*FIG. 5*

*FIG. 6*

700

```
              ( Start )
                  │
                  ▼
      ┌─────────────────────────┐
      │ Parameter initialization│ ～ 710
      └─────────────────────────┘
                  │      θ_init,θ_min,θ_n,n,cnt,PowerMin
                  ▼
      ┌─────────────────────────┐
      │   Execute search process│ ◄── ～ 720 ◄────────────────┐
      │   of control algorithm  │                            │
      └─────────────────────────┘                            │
                  │  P for each θ_n                           │
                  ▼        730                                │
       No    ◇─────────────◇                                  │
    ◄────────│ P<PowerMin? │                                  │
    │        ◇─────────────◇                                  │
    │               │                                         │
    │              Yes                                        │
    │               ▼                                         │
    │    ┌─────────────────────┐                              │
    │    │   PowerMin=P        │ ～ 740                        │
    │    │   θ_min=θ_n         │                              │
    │    └─────────────────────┘                              │
    │               │                                         │
    └──────────────►│        750                              │
                    ▼                                         │
       No    ◇─────────────◇                                  │
    ◄────────│   cnt≥N?    │                                  │
    │        ◇─────────────◇                                  │
    │               │                                         │
    │              Yes                                        │
    │               ▼                                         │
    │    ┌─────────────────────┐                              │
    │    │   θ_init=θ_min      │ ～ 760                        │
    │    │   cnt=0             │                              │
    │    └─────────────────────┘                              │
    │               │        770                              │
    └──────────────►│                                         │
                    ▼                                         │
       No    ◇─────────────◇    No   ┌──────────────┐         │
    ◄────────│   flag=0?   │────────►│  cnt=cnt+1   │ ～ 780  │
             ◇─────────────◇         │  θ_n,n=n+1   │─────────┘
                    │                └──────────────┘
                   Yes
                    ▼
                ( Done )
```

**FIG. 7**

25

800

Start

Receive a reference signal via a first signal path ~810

Receive an input signal comprising a data signal of a data source and an interference signal via a second signal path ~820

Divide the reference signal into a plurality of portions ~830

Adjust a first signal property of a first of the reference signal portions to reconstruct a first portion of the interference signal ~840

Adjust a second signal property of the second reference signal portion to reconstruct a second portion of the interference signal ~850

Subtract the first reconstructed interference signal portion and the second reconstructed interference signal portion from the input signal to produce an output signal ~860

End

*FIG. 8*

FIG. 9

1000

FIG. 10

FIG. 11

FIG. 12

FIG. 13

*FIG. 14*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CA 2255272 A1
- US 2012083235 A1

**Non-patent literature cited in the description**

- **CHIH-MING CHEN et al.** An Efficient Gradient Forecasting Search Method Utilizing the Discrete Difference Equation Prediction Model. *Applied Intelligence,* 2002, vol. 16, 33-58
- **J. KIEFER et al.** Stochastic estimation of the maximum of a regression function. *Annals of Mathematical Statistics,* September 1952, vol. 23 (2), 362-466
- *Stochastic Approximation,* June 2012, http://en.wikipedia.org/wiki/Stochastic_approximation